# EUROPÄISCHE PATENTSCHRIFT

(11) **EP 2 743 515 B1**
(45) Veröffentlichungstag und Bekanntmachung des Hinweises auf die Patenterteilung: **07.08.2019**
(21) Anmeldenummer: 13005797.9
(22) Anmeldetag: 12.12.2013
(51) Int. Cl.: C02F 1/40, C02F 3/22, B01D 21/24, B03D 1/26, F04F 1/18, C02F 3/12

(54) **Wasserhebevorrichtung für gereinigtes Wasser aus einem Reinigungsbecken**
Water raising device for raising purified water from a purification basin
Système de relevage d'eau purifiée issue d'un bassin de clarification

(30) Priorität: 17.12.2012 DE 102012024832
(43) Veröffentlichungstag der Anmeldung: 18.06.2014
(73) Patentinhaber: KLARO GmbH, 95447 Bayreuth (DE)
(72) Erfinder: Schütz, Waldemar, D-95445 Bayreuth (DE)
(74) Vertreter: Spranger, Stephan

(56) Entgegenhaltungen:
- EP-A1- 0 033 407
- DE-U1- 20 105 661
- DE-U1-202012 004 597
- US-A- 4 293 506

## Beschreibung

Die Erfindung betrifft eine Wasserhebevorrichtung für gereinigtes Wasser aus einem Reinigungsbecken gemäß dem Oberbegriff des Anspruchs 1.

Derartige Wasserhebevorrichtungen werden z.B. in Reinigungsbecken von Kläranlagen eingesetzt, wie sie aus der Druckschrift DE 20 2012 004 597 als Belebungsanlagen im Aufstaubetrieb, die auch als SBR (Sequency Batch Reactor) bezeichnet werden und mindestens ein Vorklärbecken und ein Reaktorbecken als getrennte Reinigungsbecken aufweisen, bekannt sind. Diese Anlagen können unterschiedlich betrieben werden. So kann ein stetiger Zulauf von Abwasser über das Vorklärbecken in das Reaktorbecken stattfinden, wobei ein Wasserabzug von gereinigtem Wasser mit Hilfe der Wasserhebevorrichtung zunächst geschlossen ist. Mit einem Zulauf von Abwasser steigt der Wasserspiegel in dem Reaktorbecken an. Während der Abwasserzuführung laufen im Reaktorbecken nacheinander eine Belüftungsphase, eine Absetzphase und schließlich eine Wasserabzugsphase mittels der nun aktivierten Wasserhebevorrichtungen ab, wobei weiter Abwasser in das Reaktorbecken zuläuft. Die Beschickungsdauer entspricht der Zyklusdauer. Anstelle eines stetigen Zulaufs von Abwasser kann die Abwasserzuführung auch schubweise erfolgen. Dabei wird das Abwasser in bestimmten Zeitabständen aus dem Vorklärbecken dem Reaktorbecken zugeführt.

Das Dokument DE 201 05 661 U1 beschreibt eine Kleinkläranlage mit einer nicht als Siphon ausgebildeten Hebeeinrichtung, bei welcher ein knieförmiger Knick der Verrohrung auf dem gleichen Niveau wie der Anschluss einer Entlüftungsleitung liegt.

Das Dokument EP 0 033 407 A1 und das Dokument US 4 293 506 beschreiben jeweils eine Fluidumwälzvorrichtung nach dem Druckluftheberprinzip.

Das Dokument DE 20 2012 004 597 U1 beschreibt eine Kläranlage mit einem Siphonüberlauf.

In jedem Fall ist in der Wasserabzugsphase aus dem Reaktorbecken eine Wasserhebevorrichtung erforderlich, um gereinigtes Wasser, das auch Klarwasser genannt wird, aus dem Reaktorbecken abzuführen. Bei schubweiser Abwasserzuführung kann zusätzlich eine weitere Wasserhebevorrichtung in bekannter Bauweise auch vorgeklärtes Wasser aus dem Vorklärbecken in das Reaktorbecken fördern. In jedem Fall ist der Einsatz der aus der obigen Druckschrift bekannten Wasserhebevorrichtung in der Wasserabzugsphase aus dem Reaktorbecken kritisch, da über einen bisher eingesetzten Ansaugstutzen der Wasserhebevorrichtung bereits während der Belüftungsphase in SBR-Reaktoren Belebtschlamm in die Wasserhebevorrichtung gelangt und sich dort ansammelt.

Eine anfänglich hohe Verschmutzung zu Beginn der Wasserabzugsphase ist optisch deutlich wahrnehmbar und kann zur Verstopfung von Sickergruben führen. Ein auch nur anfänglich mit Belebtschlamm belastetes Wasser kann die steigenden Anforderungen an die Qualität gereinigten Abwassers nur unzureichend erfüllen. Nachgeschaltete Sickergruben, Desinfektionsstufen und Brauchwasseranlagen erfordern einen erhöhten Aufwand, um den Restanteil an Belebtschlamm, der mit jedem Zyklus anfällt, zu beseitigen.

Es ist daher die Aufgabe der vorliegenden Erfindung, eine verbesserte Wasserhebevorrichtung bereit zu stellen, welche die oben genannten Nachteile überwindet und mittels konstruktiver Maßnahmen den Eintrag von Verunreinigungen in einzelnen Betriebsphasen eines Abwasserreinigungsverfahrens in z.B. einer SBR-Kläranlage oder einer Ölabscheideanlage vermindert.

Diese und andere Aufgaben der vorliegenden Erfindung werden mit einer Wasserhebevorrichtung mit den Merkmalen des Anspruchs 1 gelöst.

Bevorzugte Ausgestaltungen und Weiterbildungen sind in den abhängigen Ansprüchen dargelegt.

Gemäß der vorliegenden Erfindung weist eine Wasserhebevorrichtung für gereinigtes Wasser aus einem Reinigungsbecken ein U-förmiges Rohr auf, das mit seiner Basis in eine zu reinigende Flüssigkeit eines Reinigungsbeckens eintaucht und einen ersten Schenkel als Heberohr und einen zweiten Schenkel als Belüftungsrohr aufweist. Die Basis ist als verbindender Krümmer zwischen Heberohr und Belüftungsrohr ausgebildet. Obere Enden der Schenkel ragen aus der zu reinigenden Flüssigkeit heraus. Darüber hinaus weist die Wasserhebevorrichtung einen Ansaugstutzen auf, der an dem Belüftungsrohr in einem unteren Niveau in Bezug auf das zu hebende gereinigte Wasser angeordnet ist. Mindestens ein Druckluftventil ist an dem Heberohr und unterhalb des Niveaus eines Ansaugstutzens angeordnet. Der Ansaugstutzen ist als invertierte Siphonvorrichtung ausgebildet, die einen invertierten U- oder V-förmigen Krümmer aufweist, der in einen Tauchrohrstutzen mit Ansaugöffnung übergeht.

Eine derartige Wasserhebevorrichtung hat den Vorteil, dass sich in jeder der Betriebsphasen vorzugsweise einer Belebungsanlage im Aufstaubetrieb eine Luftblase in der invertierten Siphonvorrichtung des Ansaugstutzens ausbildet, welche die hydraulische Verbindung zwischen Ansaugstutzen und Heberohr für alle Betriebsphasen unterbricht, bis auf die eigentliche Hebephase, bei der das gereinigte Wasser, das sich über dem Belebtschlamm im Reaktorbecken ansammelt, abgezogen wird. Bei diesem Vorgang wird demnach über die invertierte Siphonvorrichtung unter Entweichen der Luftblase über das Belüftungsrohr ausschließlich das gereinigte Wasser, das über dem abgesetzten Belebtschlamm angesammelt ist, mit Hilfe des Heberohres aus dem Reinigungsbecken gehoben und beispielsweise einer Brauchwasserversorgung zugeführt. Das bisherige Ansammeln von Belebtschlammresten während einer Belüftungsphase des Klärwassers in einer herkömmlichen Wasserhebevorrichtung mit herkömmlichem Ansaugstutzen konnte um mehr als eine Größenordnung pro Zyklus mithilfe der Luftblasensperre in der invertierten Siphonvorrichtung der neuen Geometrie des Ansaugstutzens vermindert werden. Dennoch sammelt sich eine geringe Restmenge in einem Tauchrohrstutzen mit Ansaugöffnung, der stromaufwärts eines invertierten Siphonbogenabschnitts der invertierten Siphonrichtung angeordnet ist, und trägt beim Austrag des gereinigten Wassers dazu bei, dass eine um mehr als eine Zehnerpotenz verminderte Restmenge von Belebtschlamm anfänglich mit dem gereinigten Wasser ausgetragen wird.

Um auch diese Restmenge zu verkleinern bzw. mindestens zu halbieren, weist in einer weiteren Ausführungsform der Erfindung der Tauchrohrstutzen einen Druckluftanschluss auf, so dass der Tauchrohrstutzen direkt nach Abschluss der Hebephase als Druckluftheber eingesetzt werden kann, um die Wasserhebevorrichtung und den Tauchrohrstutzen mit gereinigtem Wasser zu füllen. Damit ist bei einer nachfolgenden Beschickungsphase des Reinigungsbeckens und einer Belüftungsphase des Belebtschlamms die mit Klarwasser einschließlich des Tauchrohrstutzens gefüllte Wasserhebevorrichtung vor einem Ansammeln von Belebtschlamm geschützt.

Das Einblasen von Luft in der Belüftungsphase kann über einen Abzweig einer ersten Druckluftleitung erfolgen, an die auch das mindestens eine Druckluftventil der Hebevorrichtung angeschlossen ist.

In einer weiteren Ausführungsform der Erfindung ist das mindestens eine Druckluftventil der Wasserhebevorrichtung am unteren Ende des Heberohres angeordnet und mit einer ersten Druckluftzuleitung verbunden.

In einer weiteren Ausführungsform der Erfindung kann ein weiteres Druckluftventil in der Hebevorrichtung angeordnet sein, das ebenfalls unterhalb des Niveaus des Ansaugstutzens des Belüftungsrohres und oberhalb des am unteren Ende des Heberohres angeordneten Druckluftventils positioniert ist. Die Anordnung von zwei Druckluftventilen in unterschiedlichen Niveaus am Heberohr hat den Vorteil, dass die Fördermenge in der Hebephase abgestuft gesteuert werden kann.

In einer weiteren Ausführungsform der Erfindung ist es vorgesehen, die invertierte Siphonvorrichtung aus mehreren 90°-Krümmern und einem Tauchrohrstutzen zusammenzustecken. Dazu weist die invertierte Siphonvorrichtung den Tauchrohrstutzen mit einer unteren Ansaugöffnung auf, einen ersten 9o°-Krümmer, in den der Tauchrohrstutzen mit einer oberen Öffnung hineinragt, sowie einen zweiten 9o°-Krümmer, der mit dem ersten 90°-Krümmer zu einem invertierten Siphonbogenabschnitt verbunden ist. Ein dritter 9o°-Krümmer verbindet dann den invertierten Siphonbogenabschnitt mit einer Öffnung in dem Belüftungsrohr. Diese Öffnung in dem Belüftungsrohr kann ihrerseits durch ein T-Abzweigstück, das in das Belüftungsrohr eingesetzt ist, realisiert werden. Diese Ausführungsform der Erfindung hat den Vorteil, dass bestehende herkömmliche Hebevorrichtungen auf einfache und preiswerte Weise umgerüstet werden können, um die Vorteile der Erfindung zu nutzen.

Dazu ist das Belüftungsrohr mit der invertierten Siphonvorrichtung so positioniert, dass die in der invertieren Siphonvorrichtung eingeschlossene Luftblase bei Beginn des Klarwasserabzugs entweichen kann, ohne dass eine Leistungseinbuße bei der Förderung des gereinigten Wassers erfolgt. Dabei wird das gereinigte Wasser bis zu einem minimalen Wasserstandsniveau, nämlich dem Niveau der Öffnung in dem Belüftungsrohr zu der invertierten Siphonvorrichtung hin abgezogen. Danach tritt Luft in den Ansaugstutzen und die invertierte Siphonvorrichtung ein, womit die Wassersäule in dem Belüftungsrohr abreißt, und sich gleichzeitig einen neue Luftblase in der invertierten Siphonvorrichtung ausbildet. Es läuft auch kein Wasser mehr in das Heberohr nach und die Wasserhebevorrichtung hört auf zu fördern. Die sich bildende neue Luftblase bleibt in der invertierten Siphonvorrichtung bis zum nächsten Klarwasserabzug bestehen. Dabei verhindert die Luftblase in der invertierten Siphonvorrichtung, dass während der Belüftungsphase Feststoffe des Belebtschlamms in die Hebevorrichtung gelangen. Durch aktives Einblasen von Luft über eine zweite Druckluftleitung zu einem Druckluftanschluss in dem Tauchrohrstutzen werden erfindungsgemäß weitere Verbesserungen erzielt.

Wenn nämlich bei unvollständigem Wasserabzug während der Hebephase keine neue Luftblase in der invertierten Siphonvorrichtung gebildet wird, kann durch aktives Einlasen von Luft über den Druckluftanschluss am unteren Ende des Tauchrohrstutzens eine hydraulische Verbindung zwischen Reinigungsbecken oder Reaktorbecken und Heberohr, die bei unvollständigem Wasserabzug hydraulisch verbunden sind, getrennt werden. In Fällen, in denen die Wasserhebevorrichtung nach Erreichen des minimalen Wasserstandsniveaus weiterarbeitet, kann sich der Wasserstand im Heberohr unter das Niveau im Behälter absenken. Wenn dieses auftritt, kann während der Beschickungsphase dieser Unterschied ausgeglichen werden, sobald der Wasserstand im Behälter die Unterkante des invertierten Siphonbogenabschnitts erreicht. Ein derartiger Ausgleich kann verhältnismäßig schnell ablaufen und einen zusätzlichen Feststoffeintrag in die Wasserhebevorrichtung bewirken. Diesem kann entgegengewirkt werden durch Einblasen von Luft in den Tauchrohrstutzen nach dem Wasserabzug, so dass der Tauchrohrstutzen als Druckluftheber arbeitet und die Wasserhebevorrichtung mit gereinigtem Wasser bzw. Klarwasser befüllt, bevor eine unkontrollierte Beschickung mit vorgeklärten Abwässern erfolgt.

Dazu ist es gemäß der Erfindung vorgesehen, dass die Wasserhebevorrichtung eine Steuervorrichtung zum Steuern des Betriebs der Wasserhebevorrichtung aufweist. Die Steuervorrichtung ist dazu eingerichtet, eine Belüftung der invertierten Siphonvorrichtung über die zweite Druckluftleitung derart zu steuern, dass zeitlich für alle Betriebsphasen außer der Hebephase eine Luftblase den invertierten Siphonbogenabschnitt ausfüllt und die hydraulische Verbindung zwischen Reinigungsbecken und Heberohr unterbindet. Ferner ist die Steuervorrichtung eingerichtet, in der Hebephase das mindestens eine Druckluftventil in dem Heberohr von einer Schließposition in eine Offenposition zu schalten und Wasser über den Ansaugstutzen in dem Belüftungsrohr zu einem offenen oberen Ende des Heberohres zu fördern. Darüber hinaus ist die Steuervorrichtung eingerichtet, um nach einem Wasserabzug in der Hebephase den Tauchrohrstutzen mit Druckluftanschluss als Druckluftheber zu aktivieren und vor einer erneuten Beschickung des Reinigungsbeckens mit zu reinigender Flüssigkeit die Wasserhebevorrichtung mit gereinigtem Wasser aufzufüllen.

Darüber hinaus ist es in vorteilhafter Weise möglich, sowohl das Heberohr als auch das Belüftungsrohr als Teleskoprohre auszubilden, um die Einsatzmöglichkeiten der Wasserhebevorrichtung zu erhöhen und diese an unterschiedliche Maße von unterschiedlichen Kläranlagen oder Ölabscheideanlagen ohne einen großen Umbau anzupassen.

Darüber hinaus ist es vorgesehen, mindestens eine Wasserhebevorrichtung für eine Kläranlage einzusetzen, insbesondere für eine vollbiologische Kleinkläranlage, die ein Vorklärbecken und ein Reaktorbecken aufweist, wobei die Wasserhebevorrichtung in dem Reaktorbecken angeordnet ist.

In derartigen vollbiologischen Kleinkläranlagen wird mit dem aus der Druckschrift DE 20 1012 004 597 bekannten Aufstaubetrieb gearbeitet, bei dem die in den vorhergehenden Ausführungsformen erwähnten, nacheinander in dem Reaktorbecken durchgeführten Phasen, wie Belüftungsphase, Absetzphase und schließlich Wasserabzugsphase der Wasserhebevorrichtung durchgeführt werden. Ein Vorteil dieser Hebevorrichtung ist es, dass die Energie zum Heben des Wassers durch Einführen von Druckluft in ein Heberohr bereitgestellt wird, so dass keinerlei mechanisch zu bewegende Pumpen vorzusehen sind und lediglich Druckventile mit einem Aktuator zum Schalten von einer Schließposition zu einer Offenposition und umgekehrt erforderlich sind.

In einer weiteren Ausführungsform einer modifizierten Kläranlage ist es vorgesehen, dass das Vorklärbecken als Ölabscheideanlage ausgebildet ist und eine weitere Wasserhebevorrichtung aufweist, welche die öl- und fettfreien Klärwässer des Vorklärbeckens in das Reaktorbecken transportiert. Auch hier können die Vorteile der Steuerungsmöglichkeiten einer derartigen Wasserhebevorrichtung genutzt werden, um zu verhindern, dass die an der Oberfläche der Ölabscheideanlage schwimmenden öl- und fetthaltige Schichten in das Reaktorbecken transportiert werden, und somit in vorteilhafter Weise nur öl- und fettfreies Klärwasser des Vorklärbeckens in das Reaktorbecken gelangen.

Eine derartige Ölabscheideanlage weist darüber hinaus einen Überlaufanschluss auf, über den eine im Oberflächenbereich des Abwassers der Ölabscheideanlage abgeschiedene öl- und fetthaltige Schicht zyklisch abführbar ist. Dazu wird lediglich der Füllstand des Vorklärbeckens zyklisch zum Abführen der öl- und fetthaltigen Schicht bis zu dem Überlaufanschluss angehoben.

Weitere Aufgaben, Vorteile, Merkmale und Ausgestaltungen der vorliegenden Erfindung werden ersichtlich aus der folgenden detaillierten Beschreibung bevorzugter Ausführungsformen mit Bezug auf die Zeichnungen.
- Fig. 1: zeigt eine schematische Ansicht einer Wasserhebevorrichtung in einem Reinigungsbecken mit zu reinigender Flüssigkeit;
- Fig. 2: zeigt mit den Figuren 2a, 2b und 2c Prinzipskizzen unterschiedlicher Ausführungen zeigt Prinzipskizzen unterschiedlicher Ausführungsformen eines Absaugstutzens mit einer invertierten Siphonvorrichtung;
- Fig. 3: zeigt mit den Figuren 3a, 3b und 3c die Wirkung der invertierten Siphonvorrichtung in unterschiedlichen Betriebsphasen des Reinigungsbehälters;
- Fig. 4: zeigt mit den Figuren 4a bis 4e ein Abziehen und ein Rückbilden einer Luftblase in der invertierten Siphonvorrichtung während der Hebephase der Wasserhebevorrichtung;
- Fig. 5: zeigt mit den Figuren 5a und 5b das Ausbilden einer Luftblase bei nicht vollständig aus einer erfindungsgemäßen Hebevorrichtung ausgetragenem, gereinigtem Wasser;
- Fig. 6: zeigt mit den Figuren 6a, 6b und 6c die Verwendung eines Tauchrohrstutzens als Druckluftheber zum Füllen der erfindungsgemäßen Wasserhebevorrichtung mit gereinigtem Wasser;
- Fig. 7: zeigt eine erfindungsgemäße Wasserhebevorrichtung in Teleskopbauweise;
- Fig. 8: zeigt eine Prinzipskizze einer biologisch aktiven Kläranlage mit einer Wasserhebevorrichtung gemäß einer der vorhergehenden Ausführungsformen.

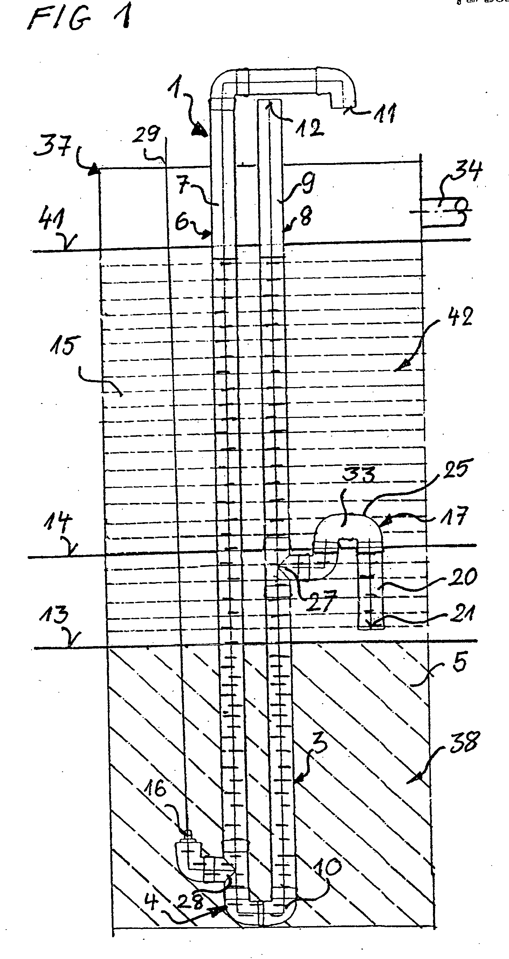

Fig. 1 zeigt eine schematische Ansicht einer Wasserhebevorrichtung 1 in einem Reinigungsbecken 37 mit einer zu reinigender Flüssigkeit 5. Das Reinigungsbecken 37 ist bis zu einem Überlauf 34 mit der zu reinigender Flüssigkeit 5 gefüllt. Nach einer Absetzphase haben sich im unteren Bereich des Reinigungsbeckens 37 unterhalb eines Grenzschichtniveaus 13 Feststoffpartikel und Belebtschlamm 38 abgesetzt. Darüber hat sich eine Wassersäule 42 aus gereinigtem Wasser 15 gebildet, die von einem Füllstandsniveau 41 bis zu dem Grenzschichtniveaus 13 reicht. Die hier gezeigte Wasserhebevorrichtung 1 ist in der Lage das gereinigte Wasser 15 der Wassersäule 42 zwischen dem Füllstandsniveau 41 und einem Wasserstandsniveau 14 oberhalb des Grenzschichtniveaus 13 mittels eines Heberohres 7 über das Füllstandsniveau 41 hinaus mindestens bis zu einem offenen oberen Ende 11 des Heberohres 7 zu fördern.

Dazu besteht die Wasserhebevorrichtung 1 im Prinzip aus einem U-förmigen Rohr 3, das als Heberohr 7 einen ersten Schenkel 6 aufweist, wobei ein zweiter Schenkel 8 des U-förmigen Rohres 3 als Belüftungsrohr 9 dient und eine Basis 4 des U-förmigen Rohres 3 einen Krümmer 10 aufweist, der das Heberohr 7 mit dem Belüftungsrohr 9 verbindet. Auch das Belüftungsrohr 9 ragt mit seinem oberen Ende 12 aus dem Füllstandsniveau 41 heraus. Das Belüftungsrohr 9 steht mit einer Ansaugöffnung 21 eines Tauchrohrstutzens 20 mechanisch in Verbindung. Zwischen dem Tauchrohrstutzen 20 und dem Belüftungsrohr 9 ist eine invertierte Siphonvorrichtung 17 angeordnet. Aufgrund der invertierten Anordnung der Siphonvorrichtung 17 verbleibt in einem invertierten Siphonbogenabschnitt 25 eine Luftblase 33 bestehen, die in allen Betriebsphasen eines Reinigungszyklus die hydraulische Verbindung zwischen dem Heberohr 7 und der Flüssigkeit in dem Reinigungsbehälter 37, außer während der Hebephase dieser Wasserhebevorrichtung 1, unterbricht.

Um die Wasserhebevorrichtung 1 zu aktivieren und die Hebephase des Heberohres 7 zum Abziehen des gereinigten Wassers 15 bis zu dem Wasserstandsniveau 14 durchzuführen, ist an einem unteren Ende 28 des Heberohres 7 ein Druckluftanschluss 16 oder ein Druckluftventil angeordnet. Der Druckluftanschluss 16 oder das Druckluftventil sind an eine erste Druckluftleitung 29 angeschlossen. Ein Druckluftventil ist in der Lage, eine Offenposition zum Aktivieren der Drucklufthebefunktion und eine Schließposition zum Beenden der Drucklufthebefunktion einzunehmen. Ein derartiges Druckluftventil kann außerhalb des Reinigungsbeckens 37 angeordnet sein, so dass sich in dem Fall die Funktion am unteren Ende des Heberohres 7 auf die Funktion eines Druckluftanschlusses reduziert.

Sowohl die Drucklufthebefunktion als auch die Wirkung der invertierten Siphonvorrichtung 17 mit der Ansaugöffnung 21 und der Luftblase 33 zur Unterbrechung der hydraulischen Verbindung zwischen der Flüssigkeit im Reinigungsbecken 37 und dem Heberohr 7 in den unterschiedlichen Phasen einer Reinigung in dem Reinigungsbecken 37 wird mit den nachfolgenden Figuren näher erläutert.

Wird das Reinigungsbecken 37 zusätzlich oder ausschließlich als Ölabscheidebecken eingesetzt, sammeln sich in der Absetzphase Feststoffe und/oder Belebtschlamm 38 im unteren Bereich des Reinigungsbeckens 37. Gleichzeitig scheiden sich an der Oberfläche der Wassersäule 42 öl- und fetthaltige Substanzen in einer öl- und fetthaltigen Schicht ab. Diese öl- und fetthaltige Schicht kann beispielsweise durch ein zyklisches Anheben des Füllstandsniveaus 41 zu dem Niveau des Überlaufs 34 aus dem Reinigungsbecken 37 abgezogen werden. Selbst wenn Reste der öl- und fetthaltigen Schicht auf der Oberfläche des gereinigten Wassers 15 beim Abziehen des Wassers über das Heberohr 7 bis zum Bereich der invertierten Siphonvorrichtung 17 absinken, gelangen keine öl- und fetthaltigen Substanzen in die Wasserhebevorrichtung 1, da die Drucklufthebefunktion wirkungslos wird und kein Wasser mehr über die Ansaugöffnung 21 abzieht, sobald die Wassersäule in dem Belüftungsrohr 9 eine Öffnung 27, die mit der invertierten Siphonvorrichtung 17 verbunden ist, erreicht hat. Somit kann die in Figur 1 gezeigte Wasserhebevorrichtung 1 auch in Reinigungsbecken 37 einer Ölabscheideanlage eingesetzt werden.

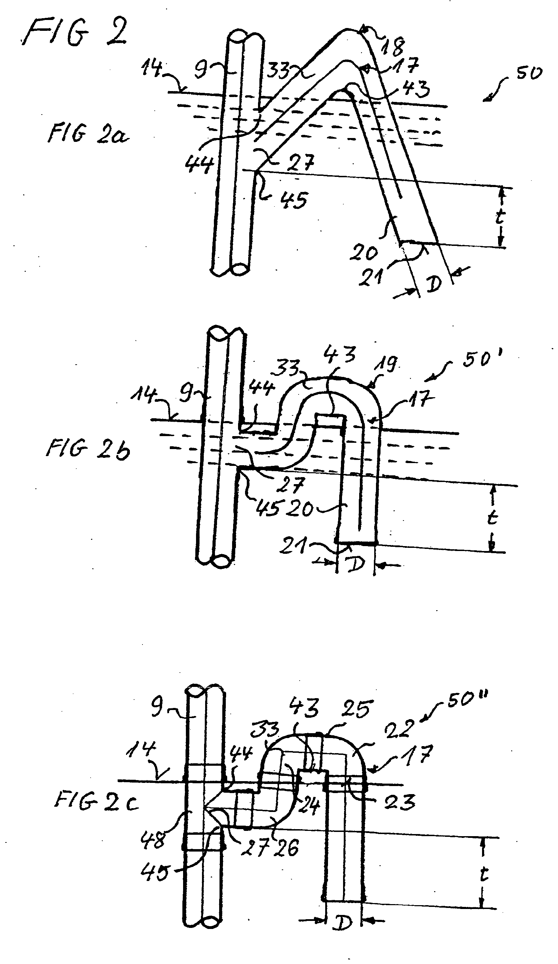

Figur 2 zeigt Prinzipskizzen unterschiedlicher Ausführungsformen eines Absaugstutzens 50, 50' und 50" mit einer invertierten Siphonvorrichtung 17, die mit einem Belüftungsrohr 9 der Wasserhebevorrichtung 1, wie sie in Figur 1 gezeigt wird, zusammenwirkt. Komponenten mit gleichen Funktionen wie in Figur 1 werden in den nachfolgenden Figuren mit gleichen Bezugszeichen gekennzeichnet und nicht extra erörtert.

Figur 2a zeigt eine Ausführungsform eines Absaugstutzens 50 mit der invertierten Siphonvorrichtung 17, die einen invertierten V-förmigen Krümmer 18 aufweist. Der V-förmige Krümmer 18 ist an eine Öffnung 27 des Belüftungsrohres 9 angeschlossen und der invertierte V-förmige Krümmer 18 geht in einen Tauchrohrstutzen 20 über, der an seinem unteren Ende eine Ansaugöffnung 21 aufweist. Diese Ansaugöffnung reicht tiefer als die Öffnung 27 an ihrem unteren Öffnungspunkt 45 um eine Tauchtiefe t in die abzupumpende Wassersäule hinein. Der Betrag der Tauchtiefe t liegt beispielsweise zwischen 50 mm ≤ t ≤ 200 mm. Diese in die Wassersäule tiefer hineinragende Tauchtiefe t richtet sich auch nach dem Durchmesser D des Belüftungsrohres 9 bzw. des invertierten V-förmigen Krümmers 18. Eine bevorzugte Durchmesserstaffel weist die Durchmesser D = 50 mm, D = 25 mm oder D = 100 mm auf. Dabei ist die Tauchtiefe t der in die Wassersäule eintauchenden Ansaugöffnung 21 mit t ≥ D vorgesehen.

Der V-förmige Krümmer 18 weist eine untere Krümmerwand 43 auf, wobei die untere Krümmerwand 43 zur Ausbildung einer geschlossenen Luftblase 33 in dem V-förmigen invertierten Krümmer 18 oberhalb eines oberen Öffnungspunktes 44 der Öffnung 27 des Belüftungsrohres 9 liegt. Somit bildet sich bei dem in Figur 2a gezeigten unteren Wasserstandsniveau 14 ein abgeschlossener Volumenbereich des invertierten V-förmigen Krümmers 18 aus, in dem eine geschlossene Luftblase 33 eingeschlossen ist. Diese Luftblase 33 unterbricht die hydraulische Verbindung zwischen der Flüssigkeit in dem Reinigungsbehälter und dem Heberohr, wie es die Figur 1 zeigt.

Figur 2b zeigt eine weitere Ausführungsform des Abzugskrümmers 50', bei dem anstelle des in Figur 2a gezeigten invertierten V-förmigen Krümmers 18 ein U-förmiger Krümmer 19 zur Ausbildung einer invertierten Siphonvorrichtung 17 vorgesehen ist. An den U-förmigen Krümmer 19 schließt sich ein Tauchrohrstutzen 20 mit einer unteren Ansaugöffnung 21 an. Die Ansaugöffnung 21 ist auch bei dieser Ausführungsform gemäß Figur 2b um die Eintauchtiefe t tiefer als ein unterer Öffnungspunkt 45 der Öffnung 27 des Belüftungsrohres 9 angeordnet. Die Durchmesserverhältnisse für den Durchmesser D sind die gleichen wie in Figur 2a. In der Ausführungsform gemäß Figur 2b ist zur Ausbildung einer geschlossenen Luftblase 33 eine untere Krümmerwand 43 oberhalb eines oberen Öffnungspunktes 44 der Öffnung 27 vorgesehen.

Figur 2c zeigt eine praktische Durchführungsform eines Absaugstutzens 50", der aus Rohrstücken und 90°-Krümmern zusammengesetzt ist und die invertierte Siphonvorrichtung 17 bildet. Dazu ist an dem Belüftungsrohr 9 ein T-Abzweigstück 48 angeordnet, in das ein 90°-Krümmer 26 eingesteckt ist, an den sich nach oben ein weiterer 90°-Krümmer 24 anschließt, in den wiederum ein weiterer 90°-Krümmer 22 hineinragt, dessen nach unten gerichtete Öffnung eine obere Öffnung 23 des Tauchrohrstutzens 20 aufnimmt. Eine untere Öffnung des Tauchrohrstutzens 20 bildet die Ansaugöffnung 21 dieser invertierten Siphonvorrichtung 17.

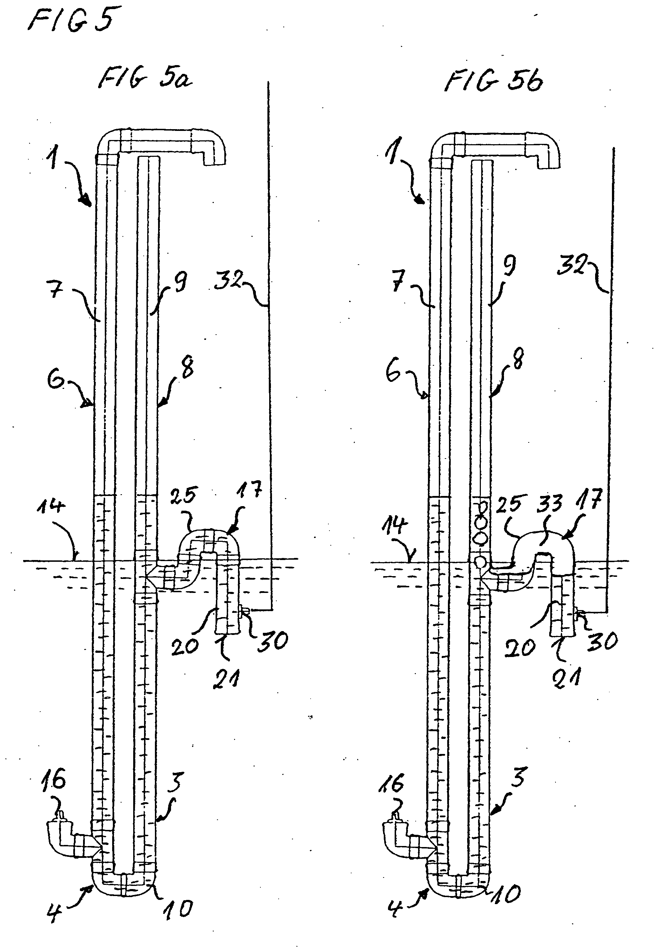

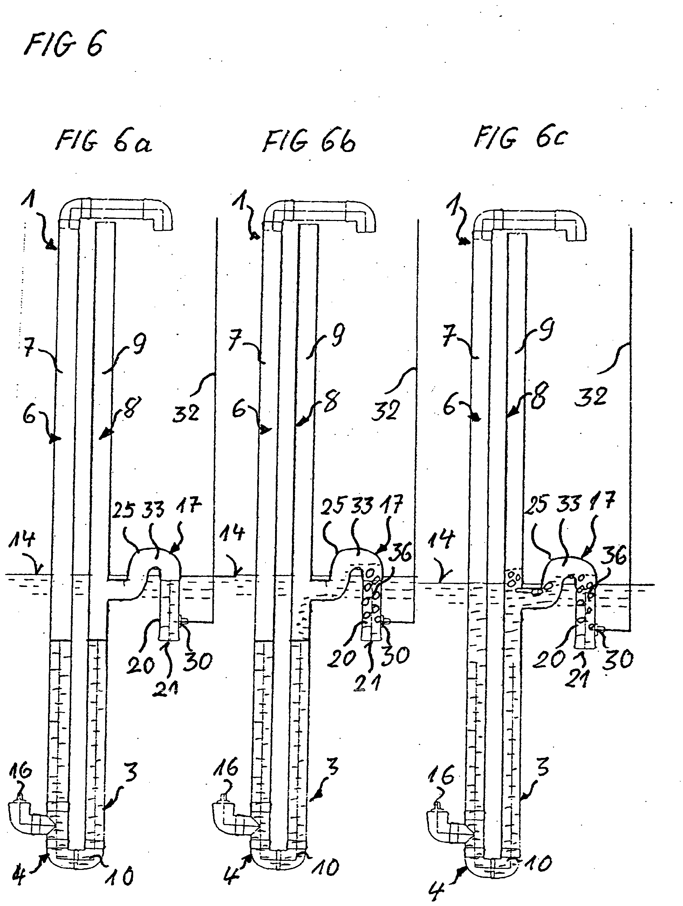

Bisherige Wasserhebevorrichtungen sind, wie es die obige Druckschrift zeigt, lediglich mit einem einfachen Ansaugstutzen ausgestattet, in dem sich keine geschlossene Luftblase ausbilden kann, so dass eine ständige hydraulische Verbindung zwischen der Flüssigkeit in dem Reinigungsbecken und der Wasserhebevorrichtung besteht. Dabei wird in einer Belüftungsphase des zu reinigenden Wassers derart viel Feststoff und Belebtschlamm in die Hebevorrichtung eingespült, dass beim Austrag der Wassersäule pro Zyklus, wie es die Tabelle 1 zeigt, ein Feststoffaustrag um 180 ml pro Zyklus nachgewiesen werden konnte. Durch den Einsatz der in Figur 2 gezeigten Modifikationen einer erfindungsgemäßen Absaugstutzens 50 mit der invertierten Siphonvorrichtung anstelle des bekannten Ansaugstutzens konnte dieser Feststoffaustrag um 93% auf 10 bis 11 ml pro Zyklus gesenkt werden, wie es aus den Vergleichsversuchsergebnissen der Tabelle 1 hervorgeht. Eine weitere Senkung des Feststoffaustrags pro Zyklus auf Werte zwischen 3 bis 6 ml pro Zyklus konnte durch eine weitere Verbesserung der Wasserhebevorrichtung mit einem Tauchrohrstutzen und invertiertem Siphonbogenabschnitt erreicht werden, wobei der Tauchrohrstutzen eine Drucklufthebefunktion durch einen zusätzlichen Druckluftanschluss im Tauchrohrstutzen, wie es die nachfolgenden Figuren 5 und 6 zeigen, aufweist.

**Tabelle 1**

| Vergleichsversuche - | Bisherige Wasserhebevorrichtung mit Ansaugstutzen ohne invertiertem Siphonbogenabschnitt | | Wasserhebevorrichtung mit Tauchrohrstutzen und invertiertem Siphonbogenabschnitt | | Wasserhebevorrichtung mit Tauchrohrstutzen und invertiertem Siphonbogenabschnitt und einer Druckluftheberfunktion | |
|---|---|---|---|---|---|---|
| Feststoffanteil [ml/l] | 24 | 25 | 1,5 | 1,5 | 0,9 | 0,4 |
| Probemenge [l] | 7,6 | 7,2 | 6,6 | 7,5 | 6,9 | 7,0 |
| Feststoffaustrag pro Zyklus [ml] | 182 | 180 | 10 | 11 | 6 | 3 |

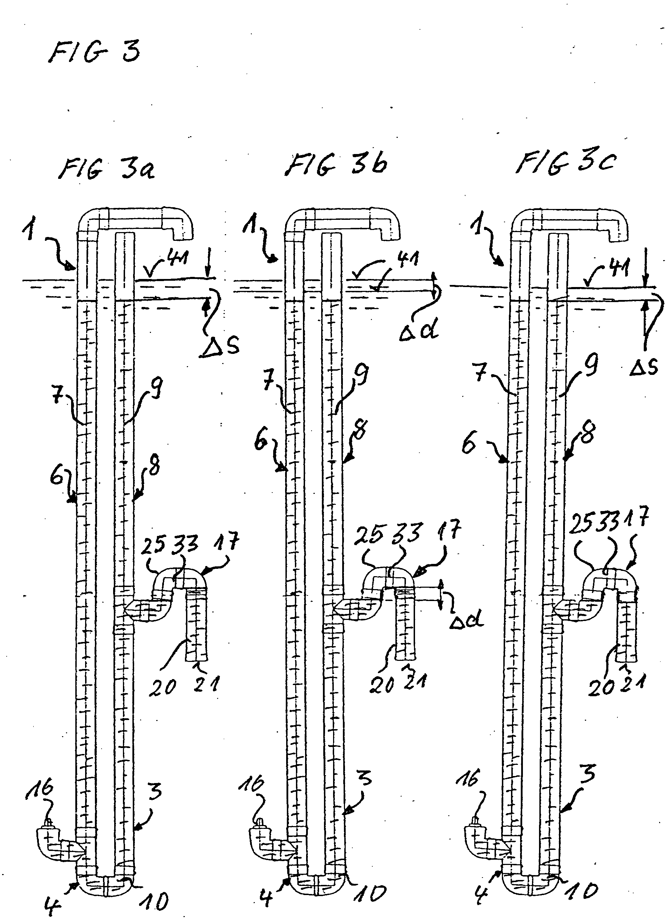

Figur 3 zeigt mit den Figuren 3a, 3b und 3c die Wirkung der invertierten Siphonvorrichtung 17 in den unterschiedlichen Betriebsphasen des Reinigungsbehälters. Dazu zeigt Figur 3a, dass die Wasserhebevorrichtung nach einer Beschickungsphase mit einer zu reinigenden Flüssigkeit bis auf einen Absatz Δs sowohl in dem Heberohr 7 als auch in dem Belüftungsrohr 9 befüllt ist. Bei der anschließenden Belüftungsphase schwankt der nicht befüllte Absatz Δs in dem Heberohr 7 und dem Belüftungsrohr 9 um einen Betrag von etwa Δd, was mit den Bewegungen und Änderungen des Füllstandsniveau 41 während der Belüftungsphase zusammenhängt. In der Absetzphase, wie es Figur 3c zeigt, ist der Absatz Δs geringfügig gegenüber der Beschickungsphase verringert.

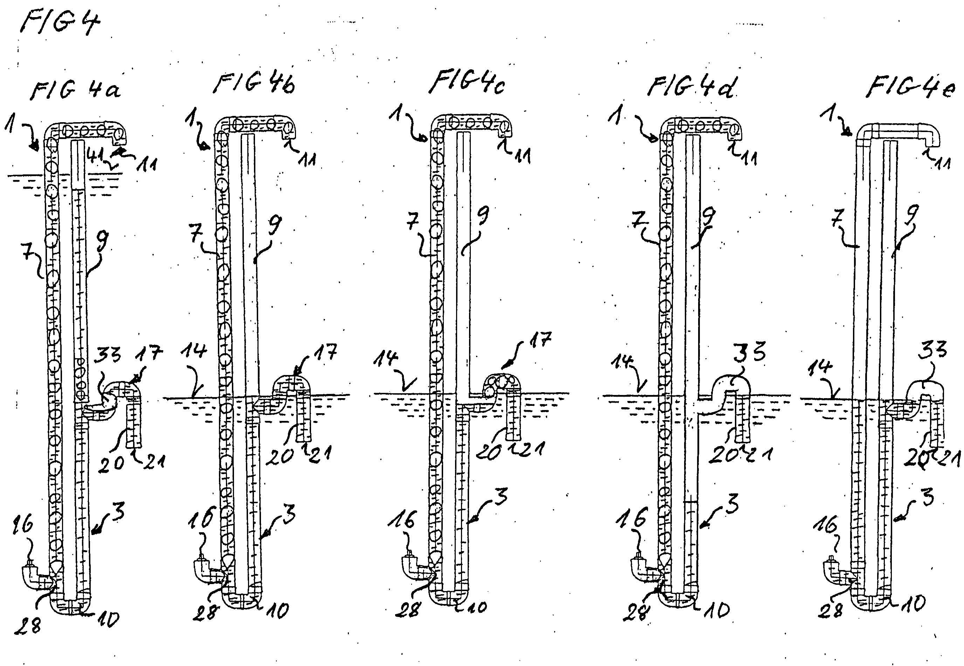

Figur 4 zeigt mit den Figuren 4a bis 4e ein Abziehen und ein Rückbilden einer Luftblase 33 in der invertierten Siphonvorrichtung 17 während der Hebephase der Wasserhebevorrichtung 1.

Sobald die Absetzphase beendet ist und sich eine Wassersäule aus gereinigtem Wasser in dem Reinigungsbehälter gebildet hat, kann dieses gereinigte Wasser über die Wasserhebevorrichtung 1, wie es Figur 4a zeigt, abgezogen werden, indem ein Druckluftventil von einer Schließposition in eine Offenposition übergeht und Druckluft über den Druckluftanschluss 16 am unteren Ende 28 des Heberohres 7 das gereinigte Wasser beim Aufsteigen in dem Heberohr 7 mitreißt und über das Füllstandsniveau 41 hebt, so dass das gereinigte Wasser aus einem oberen Ende 11 des Heberohres 7 abgezogen werden kann. Gleichzeitig mit dem Beginn der Wasserhebephase, bei der gereinigtes Wasser über die Ansaugöffnung 21 und die invertierte Siphonvorrichtung 17 in das Belüftungsrohr 9 gezogen wird, steigt die eingeschlossene Luftblase 33 in der Wassersäule des Belüftungsrohres 9 auf und entweicht bis, wie Figur 4b zeigt, das Füllstandsniveau 41 auf das untere Wasserstandsniveau 14 abgesunken ist. Bei weiterem Absenken der Wassersäule in dem Belüftungsrohr 9, wie es Figur 4c zeigt, steigt Luft in die invertierte Siphonvorrichtung 17 auf und bildet, wie es Figur 4d zeigt, erneut eine Luftblase 33. Der Hebevorgang kommt, wie es Figur 4e zeigt, beim Ausbilden der Luftblase 33 zum Stehen, so dass die Hebevorrichtung 1 sowohl in dem Heberohr 7 als auch in dem Belüftungsrohr 9 nur noch teilweise eine Wassersäule aufweist.

Figur 5 zeigt mit den Figuren 5a und 5b das Ausbilden einer Luftblase 33 bei nicht vollständig aus der erfindungsgemäßen Hebevorrichtung ausgetragenem, gereinigtem Wasser. Wie Figur 5a zeigt, ist zunächst in der invertierten Siphonvorrichtung 17 bei nicht vollständig ausgetragenem Wasser aus der Wasserhebevorrichtung 1 keine Luftblasenbildung in der invertierten Siphonvorrichtung möglich. Vielmehr bleibt die invertierte Siphonvorrichtung mit Wasser aufgefüllt. Für diesen Fall ist zur erfindungsgemäßen Verminderung des Einschleppens von Feststoffen oder Belebtschlamm in die Wasserhebevorrichtung 1 an dem Tauchrohrstutzen 20 ein Druckluftanschluss 30 angebracht. Mit dem Druckluftanschluss 30 besteht die Möglichkeit, dass trotz des unvollständigen Abziehens von Wasser aus der Wasserhebevorrichtung 1 nun Luft in die invertierte Siphonvorrichtung eingeleitet wird und sich eine geschlossen Luftblase 33 bildet, wobei überschüssige Luft über das Belüftungsrohr 9 abgeführt wird. Damit ist es trotz des unvollständigen Abziehens von Wasser aus der Hebevorrichtung 1 möglich, die hydraulische Verbindung zwischen der Flüssigkeit des Reinigungsbehälters und dem Heberohr 9 durch die geschlossene Luftblase 33 zu unterbrechen.

Figur 6 zeigt mit den Figuren 6a, 6b und 6c eine weitere erfindungsgemäß vorteilhafte Anwendung durch das Anbringen eines Druckluftanschlusses 30 mit einer zweiten Druckluftleitung 32 an dem Tauchrohrstutzen 20, wenn beispielsweise die Wassersäulen in der Wasserhebevorrichtung 1 übermäßig in der Hebephase abgesunken sind. Dann kann in vorteilhafter Weise mit Hilfe der Druckluft über die Druckluftleitung 32 eine Drucklufthebefunktion mit Hilfe des Tauchrohrstutzens erzeugt werden, so dass in Figur 6b Wasser in das Belüftungsrohr 9 mittels eines Drucklufthebers 36 gehoben wird und sowohl das Heberohr 7 als auch das Belüftungsrohr 9 mit Wasser soweit aufgefüllt werden kann, bis eine geschlossene Luftblase 33, wie es die Figur 6c zeigt, in der invertierten Siphonvorrichtung 17 ausgebildet ist.

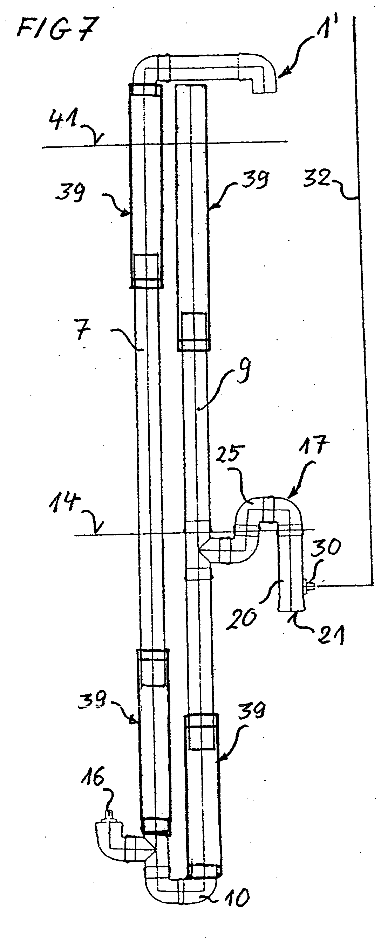

Eine Modifikation der erfindungsgemäßen Wasserhebevorrichtung wird mit Figur 7 gezeigt. Die dort abgebildete Wasserhebevorrichtung 1' ist mit Teleskoprohren 39 ausgestattet, die es ermöglichen, eine Wasserhebevorrichtung 1' den Maßen eines Reinigungsbeckens oder eines Reaktorbeckens sowohl in Bezug auf die Ansaugöffnung 21 als auch in Bezug ein unterschiedliches Füllstandsniveau 41 den Gegebenheiten eines Reinigungsbeckens oder eines Reaktorbeckens anzupassen.

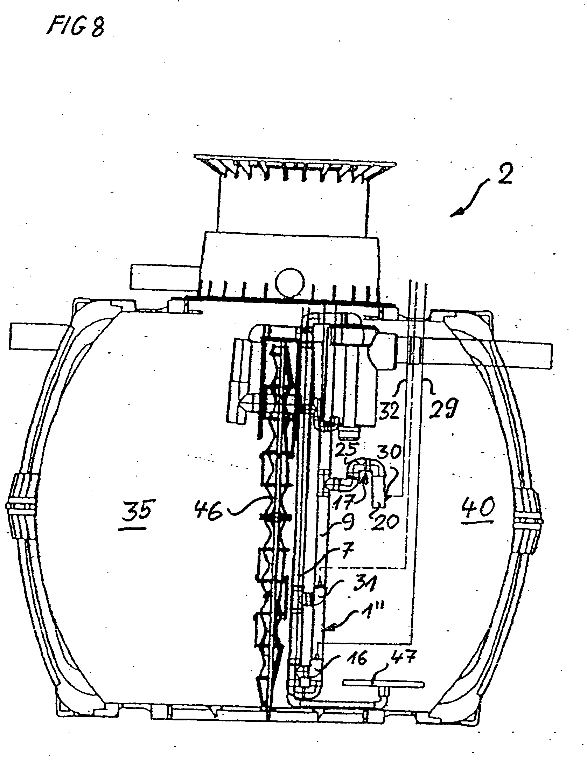

Figur 8 zeigt eine Prinzipskizze einer biologisch aktiven Kläranlage 2 mit einer Wasserhebevorrichtung 1" gemäß einer weiteren Ausführungsform der Erfindung. Die biologisch aktive Kläranlage 2 weist ein Vorklärbecken 35 auf, in dem Abwasser vorgeklärt wird, und ein Reaktorbecken 40, das von dem Vorklärbecken 35 mittels einer Trennwand 46 abgeschottet ist. In der Beschickungsphase wird vorgeklärtes Abwasser aus dem Vorklärbecken 35 in das Reaktorbecken 40 beispielsweise durch eine hier nicht gezeigte weitere Wasserhebevorrichtung in das Reaktorbecken 40 gehoben und damit eine Beschickungsphase des Reaktorbeckens 40 eingeleitet und beendet. An die Beschickungsphase 40 schließt sich eine Belüftungsphase von bioaktivem Belebtschlamm an, bei der Druckluft über eine Belüftungsplatte 47 in den Belebtschlamm und die zu reinigende Flüssigkeit gepresst wird. Nach dieser Reaktions- oder Belüftungsphase folgt eine Absetzphase in dem Reaktorbecken 40, bei der sich Feststoffe und Belebtschlamm absetzen und sich darüber eine gereinigte Wassersäule bildet, die mit Hilfe der hier gezeigten Wasserhebevorrichtung abgezogen werden kann und beispielsweise einer Sickergrube, einem Desinfektionsbereich oder einer Brauchwasseranlage zugeführt werden kann.

Die in Figur 8 eingesetzte Wasserhebevorrichtung 1" in dem Reaktorbecken 40 unterscheidet sich von den vorhergehenden Ausführungsformen dadurch, dass nicht nur am unteren Ende des Heberohres 7 ein Druckluftanschluss 16 oder ein Druckluftventil, die über die Druckluftleitung 29 versorgt werden, vorgesehen ist, sondern ein weiterer Druckluftanschluss 31 oder ein weiteres Druckluftventil in einem Niveau zwischen dem ersten Druckluftanschluss 16 und der invertierten Siphonvorrichtung 17 angeordnet ist. Damit kann die Hebephase optimiert und verkürzt werden, indem zunächst das Druckluftventil 31 über die gestrichelte Druckluftleitung versorgt wird und anschließend das untere Druckluftventil 16 über die Druckluftleitung 29 Druckluft in das Heberohr 7 presst. Weiterhin ist bei dieser weiteren Wasserhebevorrichtung 1" vorgesehen, dass auch der Tauchrohrstutzen 20 einen Druckluftanschluss 30 aufweist, mit dem die vorher anhand der Figuren 5 und 6 erörterten Funktionen durchgeführt werden können.

## Patentansprüche

1. Wasserhebevorrichtung für gereinigtes Wasser (15) aus einem Reinigungsbecken (37) aufweisend:
ein U-förmiges Rohr (3), das mit seiner Basis (4) in eine zu reinigende Flüssigkeit (5) eines Reinigungsbeckens (37) eintaucht und einen ersten Schenkel (6) als Heberohr (7) und einen zweiten Schenkel (8) als Belüftungsrohr (9) aufweist, wobei die Basis (4) als verbindender Krümmer (10) zwischen dem Heberohr (7) und dem Belüftungsrohr (9) ausgebildet ist, und wobei obere Enden (11, 12) der Schenkel (6,8) aus der zu reinigenden Flüssigkeit (5) herausragen;
einen Ansaugstutzen, der an dem Belüftungsrohr (9) in einem unteren Wasserstandsniveau (14) in Bezug auf das zu hebenden gereinigte Wasser (15) angeordnet ist, und
mindestens ein Druckluftanschluss (16), der an dem Heberohr (7) und unterhalb des Wasserstandsniveaus (14) des Ansaugstutzens angeordnet ist; wobei
der Ansaugstutzen als invertierte Siphonvorrichtung (17) ausgebildet ist, und wobei die invertierte Siphonvorrichtung (17) einen invertierten U- oder V-förmigen Krümmer (18, 19) aufweist, der in einen Tauchrohrstutzen (20) mit Ansaugöffnung (21) übergeht,
**dadurch gekennzeichnet, dass**
der Tauchrohrstutzen (20) einen Druckluftanschluss (30) zu einer zweiten Druckluftleitung (32) aufweist, und dass
die Wasserhebevorrichtung (1) eine Steuervorrichtung zum Steuern des Betriebs der Wasserhebevorrichtung (1) aufweist, wobei die Steuervorrichtung eingerichtet ist, eine Belüftung der invertierten Siphonvorrichtung (17) über die zweite Druckluftleitung (32) derart zu steuern, dass zeitlich für alle Betriebsphasen außer der Hebephase eine Luftblase (33) den invertierten Siphonbogenabschnitt (25) ausfüllt und die hydraulische Verbindung zwischen Reinigungsbehälter und Heberohr (7) unterbindet, und
wobei die Steuervorrichtung eingerichtet ist, in der Hebephase das mindestens eine Druckluftventil (16, 31) in dem Heberohr (7) von einer Schließposition in eine Offenposition zu schalten und Wasser über den Ansaugstutzen in dem Belüftungsrohr (9) zu einem offenen oberen Ende (11) des Heberohres (7) zu fördern, und
wobei die Steuervorrichtung eingerichtet ist, nach einem Wasserabzug in der Hebephase den Tauchrohrstutzen (20) mit Druckluftanschluss (30) als Druckluftheber (36) zu aktivieren und vor einer Beschickung des Reinigungsbeckens (37) mit zu reinigender Flüssigkeit die Wasserhebevorrichtung (1) mit gereinigtem Wasser aufzufüllen.

2. Wasserhebevorrichtung nach Anspruch 1, **dadurch gekennzeichnet, dass** die invertierte Siphonvorrichtung (17) aufweist:
den Tauchrohrstutzen (20) mit der unteren Ansaugöffnung (21);
einen ersten 9o°-Krümmer (22), in den der Tauchrohrstutzen (20) mit einer oberen Öffnung (23) hineinragt;
einen zweiten 9o°-Krümmer (24), der mit dem ersten 9o°-Krümmer (22) zu einem invertierten Siphonbogenabschnitt (25) verbunden ist;
einen dritten 9o°-Krümmer (26), der den invertierten Siphonbogenabschnitt (25) mit einer Öffnung (27) in dem Belüftungsrohr (9) verbindet.

3. Wasserhebevorrichtung nach Anspruch 1 oder Anspruch 2, **dadurch gekennzeichnet, dass** der mindestens eine Druckluftanschluss (16) an einem unteren Ende (28) des Heberohres (7) angeordnet und mit einer ersten Druckluftleitung (29) verbunden ist.

4. Wasserhebevorrichtung nach Anspruch 3, **dadurch gekennzeichnet, dass** ein von dem Druckluftanschluss (16) am unteren Ende (28) des Heberohres (7) beabstandeter weiterer Druckluftanschluss (31) in dem Heberohr (7) unterhalb des Wasserstandsniveau (14) des Ansaugstutzens angeordnet ist.

5. Kläranlage, die mindestens eine Wasserhebevorrichtung (1) gemäß einem der vorhergehenden Ansprüche und ein Vorklärbecken (35) sowie ein Reaktorbecken (40) aufweist, wobei die mindestens eine Wasserhebevorrichtung (1) in dem Reaktorbecken (40) angeordnet ist.

6. Kläranlage nach Anspruch 5, **dadurch gekennzeichnet, dass** das Vorklärbecken (35) als Ölabscheideanlage ausgebildet ist und eine weitere Wasserhebevorrichtung (1) gemäß einem der Ansprüche 1 bis 4 aufweist, die öl- und fettfreies Klärwasser des Vorklärbeckens (35) in das Reaktorbecken (40) transportiert.

7. Kläranlage nach Anspruch 6, **dadurch gekennzeichnet, dass** die Ölabscheideanlage einen Überlaufanschluss aufweist, über den eine im Oberflächenbereich des Abwassers der Ölabscheideanlage abgeschiedene öl- und fetthaltige Schicht zyklisch abführbar ist.

## Claims

1. Water lifting device for lifting purified water (15) from a purification tank (37) comprising:
a U-shaped pipe (3), whose base (4) is immersed in a liquid for purification (5) in a purification tank (37) with a first leg (6) as the lifting pipe (7) and a second leg (8) as the ventilation pipe (9), with the base (4) being contrived as a connecting manifold (10) between the lifting pipe (7) and the ventilation pipe (9), and with upper ends (11, 12) of the legs (6, 8) projecting out of the liquid for purification (5);
an intake fitting disposed on the ventilation pipe (9) at a lower water level (14) in relation to the purified water (15) to be lifted and
at least one compressed air connection (16) disposed on the lifting pipe (7) and below the water level (14) of the intake fitting; with
the intake fitting being contrived as an inverted siphon device (17), and with the inverted siphon device (17) having an inverted U or V-shaped manifold (18, 19) which feeds into a dip pipe fitting (20) with an intake port (21), **characterised in that**
the dip pipe fitting (20) has a compressed air connection (30) to a second compressed air line (32), and **in that**
the water lifting device (1) has a control device for controlling the operation of the water lifting device (1), with the control device being set up to control ventilation of the inverted siphon device (17) via the second compressed air line (32) in such a way that, temporally for all operating phases except the lifting phase, an air bubble (33) occupies the inverted siphon bend section (25) and prevents the hydraulic connection between the purification tank and the lifting pipe (7), and
with the control device being set up so that during the lifting phase, it switches compressed air valve (16, 31), of which there is at least one, in the lifting pipe (7) from a closed position to an open position to transport water via the intake fitting in ventilation pipe (9) to an open upper end (11) of the lifting pipe (7) and
with the control device being set up so that after water withdrawal in the lifting phase, the dip pipe fitting (20) with the compressed air connection (30) is activated as an air-lift pump (36) and before feeding the purification tank (37) with liquid for purification, the water lifting device (1) is filled up with purified water.

2. The water lifting device of claim 1, **characterised in that** the inverted siphon device (17) has:
the dip pipe fitting (20) with bottom intake port (21);
a first 90° manifold (22), inside which the dip pipe fitting (20) projects with an upper opening (23);
a second 90° manifold (24), which is connected with the first 90° manifold (22) to form an inverted siphon bend section (25);
a third 90° manifold (26), which connects the inverted siphon bend section (25) with an opening (27) in the ventilation pipe (9).

3. The water lifting device of claim 1 or 2, **characterised in that** the compressed air connection (16), of which there is at least one, is disposed at a bottom end (28) of the lifting pipe (7) and is connected with a first compressed air line (29).

4. The water lifting device of claim 3, **characterised in that** an additional compressed air connection (31) is disposed at a distance from the compressed air connection (16) at the bottom end (28) of the lifting pipe (7), inside the lifting pipe (7) below the water level (14) of the intake fitting.

5. Wastewater treatment plant comprising at least one water lifting device (1) according to one of the preceding claims and a primary clarifier tank (35) plus reactor tank (40), with the water lifting device (1), of which there is at least one, being disposed in reactor tank (40).

6. Wastewater treatment plant of claim 5, **characterised in that** primary clarifier tank (35) is contrived as an oil-water separator and has an additional water lifting device (1) according to one of claims 1 to 4 which transports the oil and fat-free sewage water of primary clarifier tank (35) into the reactor tank (40).

7. Wastewater treatment plant of claim 6, **characterised in that** the oil-water separator has an overflow connection via which an oil and fat containing layer deposited in the surface area of the wastewater in the oil-water separator can be periodically discharged.

## Revendications

1. Dispositif d'élévation d'eau pour l'eau épurée (15) d'un bassin de nettoyage (37) présentant:
un tube en forme de U (3) dont la base (4) plonge dans un liquide à épurer (5) contenu dans un bassin de nettoyage (37) et qui se compose d'une première branche (6) tenant lieu de tube d'élévation (7) et d'une deuxième branche (8) tenant lieu de tube d'amenée d'air (9), la base (4) formant un coude (10) reliant le tube d'élévation (7) et le tube d'amenée d'air (9) et les extrémités supérieures (11, 12) des branches (6, 8) dépassant du liquide à épurer (5) ;
une tubulure d'aspiration raccordée au tube d'amenée d'air (9) à un niveau d'eau bas (14) par rapport à l'eau épurée à élever (15) et
au moins un raccord d'air comprimé (16) sur le tube d'élévation (7) sous le niveau de l'eau (14) de la tubulure d'aspiration,
la tubulure d'aspiration formant un dispositif de siphon inversé (17) et ledit dispositif de siphon inversé (17) présentant un coude en forme de U ou de V inversé (18, 19) qui se prolonge par un tube immergé (20) avec orifice d'aspiration (21), **caractérisé en ce que** le tube immergé (20) présente un raccord d'air comprimé (30) le reliant à une deuxième conduite d'air comprimé (32) et **en ce que**
ledit dispositif d'élévation d'eau (1) possède un mécanisme de réglage pour réguler l'exploitation du dispositif d'élévation d'eau (1), ledit mécanisme de réglage étant paramétré pour réguler l'entrée d'air dans le dispositif de siphon inversé (17) par la deuxième conduite d'air comprimé (32) de manière à ce qu'une bulle d'air (33) emplisse la section coudée du siphon inversé (25) en temps voulu pour toutes les phases d'exploitation à l'exception de la phase d'élévation, interrompant la liaison hydraulique entre le conteneur de nettoyage et le tube d'élévation (7) ; ledit mécanisme de réglage étant par ailleurs paramétré pour faire passer d'une position fermée à une position ouverte la ou les soupapes à air comprimé (16, 31) du tube d'élévation (7) pendant la phase d'élévation et pour transporter l'eau dans le tube d'amenée d'air (9) via la tubulure d'aspiration jusqu'à une extrémité supérieure ouverte (11) du tube d'élévation (7) et
ledit mécanisme de réglage étant paramétré pour activer le tube immergé (20) présentant un raccord d'air comprimé (30) après la vidange de l'eau pendant la phase d'élévation et en faire un élévateur à air comprimé (36) et pour remplir le dispositif d'élévation d'eau (1) d'eau épurée avant l'alimentation du bassin de nettoyage (37) en liquide à épurer.

2. Dispositif d'élévation d'eau conforme à la revendication 1, **caractérisé en ce que** le dispositif de siphon inversé (17) présente :
le tube immergé (20) et son orifice d'aspiration (21) inférieur ;
un premier coude à 90 ° (22) dans lequel l'ouverture supérieure (23) du tube immergé (20) pénètre ;
un deuxième coude à 90 ° (24) relié au premier coude à 90 ° (22) pour former la section coudée du siphon inversé (25) ;
un troisième coude à 90 ° (26) qui relie la section coudée du siphon inversé (25) à une ouverture (27) du tube d'amenée d'air (9).

3. Dispositif d'élévation d'eau conforme à la revendication 1 ou à la revendication 2, **caractérisé en ce que** le ou les raccords d'air comprimé (16) sont placés à l'extrémité inférieure (28) du tube d'élévation (7) et raccordés à une première conduite d'air comprimé (29).

4. Dispositif d'élévation d'eau conforme à la revendication 3, **caractérisé en ce qu'**un raccord d'air comprimé (31) du tube d'élévation (7) distant du raccord d'air comprimé (16) à l'extrémité inférieure (28) du tube d'élévation (7) est placé sous le niveau de l'eau (14) de la tubulure d'aspiration.

5. Station d'épuration présentant au moins un dispositif d'élévation d'eau (1) conforme à l'une des revendications ci-dessus et un bassin de première décantation (35), ainsi qu'une cuve de réaction (40), ledit ou lesdits dispositifs d'élévation d'eau (1) étant placés dans la cuve de réaction (40).

6. Station d'épuration conforme à la revendication 5 **caractérisé en ce que** le bassin de première décantation (35) forme un système séparateur d'huile et présente un autre dispositif d'élévation d'eau (1) conforme à l'une des revendications 1 à 4 qui transporte l'eau clarifiée non huileuse et non grasse du bassin de première décantation (35) à la cuve de réaction (40).

7. Station d'épuration conforme à la revendication 6, **caractérisé en ce que** le système séparateur d'huile présente un raccordement à un trop-plein permettant d'évacuer de manière cyclique une couche huileuse et graisseuse à la surface des eaux usées se trouvant dans le système séparateur d'huile.
